# EUROPÄISCHE PATENTANMELDUNG

(11) **EP 3 943 730 A1**
(43) Veröffentlichungstag der Anmeldung: **26.01.2022**
(21) Anmeldenummer: 20187655.4
(22) Anmeldetag: 24.07.2020
(51) Int. Cl.: F01P 7/14, F01P 5/10, F01P 11/20

(54) **ANORDNUNG**

(71) Anmelder: TI Automotive Technology Center GmbH, 76437 Rastatt (DE)
(72) Erfinder: Boecker, Albert, 76275 Ettlingen (DE); Winter, Matthias, 76437 Rastatt (DE); Schaefer, Thorsten, 76889 Steinfeld (DE); Deibel, Florian, 76547 Sinzheim (DE); Brixner, Sebastian, 68535 Edingen-Neckarhausen (DE)
(74) Vertreter: Reiser & Partner Patentanwälte mbB

(57) **Zusammenfassung**

Anordnung (1), umfassend zumindest eine erste Einrichtung (2), zumindest eine zweite Einrichtung (3), zumindest eine dritte Einrichtung (4) und eine Fördereinrichtung (5), wobei die Einrichtungen (2, 3, 4, 5) strömungsleitend über Leitungen (6) miteinander verbunden sind, wobei in den Leitungen (6) Rückschlagventile (7, 8) angeordnet sind, welche in Abhängigkeit der Strömungsrichtung des in der Anordnung (1) transportierten Mediums das Medium durch die zweite Einrichtung (3) oder die dritte Einrichtung (4) leiten.

## Beschreibung

Die Erfindung betrifft eine Anordnung, umfassend eine erste Einrichtung, eine zweite Einrichtung, eine dritte Einrichtung und eine Fördereinrichtung, wobei die Einrichtungen über Leitungen miteinander verbunden sind.

Eine derartige Anordnung ist beispielsweise aus der DE 10 2006 011 835 A1 bekannt, wobei die Anordnung ausgebildet ist, einen Kühlmittelstrom zu transportieren. Kühlmittelströme finden sich in einer Vielzahl von Anwendungen, bei denen es erforderlich ist, eine Einrichtung zu temperieren, also je nach Anforderung entweder zu heizen oder zu kühlen. Die zu temperierende Einrichtung kann klassischerweise ein Verbrennungsmotor sein oder auch ein Gebäude. Aber auch bei neueren Anwendungen ist eine Temperierung erforderlich.

Damit Elektrofahrzeuge eine möglichst hohe Reichweite haben, ist es auch erforderlich, Komponenten von Elektrofahrzeugen zu temperieren. Zu temperierende Komponenten von Elektrofahrzeugen sind insbesondere Akkumulatoren, aber auch die Leistungselektronik oder Steckverbindungen von Schnellladeeinrichtungen. Ein Akkumulator hat eine bestmögliche Kapazität nur in einem sehr kleinen Temperaturspektrum. Daher ist es erforderlich, Akkumulatoren von Elektrofahrzeugen bei tiefen Umgebungstemperaturen zu erwärmen und bei hohen Außentemperaturen oder bei einer hohen Lastabnahme zu kühlen.

Hierzu ist es bekannt, einen Kühlmittelstrom vorzusehen, durch welchen Temperiermedium strömt. Das Temperiermedium kann dann entweder in einer Heizeinrichtung erwärmt oder in einer Kühleinrichtung abgekühlt werden. Die Steuerung des Kühlmittelstroms erfolgt dabei zumeist mittels schaltbarer Ventile, beispielsweise Magnetventilen, welche den Kühlmittelstrom dem gewünschten Aggregat zuführen. Bei dieser Ausgestaltung ist nachteilig, dass die Anordnung mehrere schaltbare Ventile benötigt, so dass die Anordnung vergleichsweise komplex ist. Damit gehen ein erhöhtes Gewicht der Anordnung, eine erhöhte Störanfälligkeit und eine aufwändigere elektronische Steuerung einher.

Der Erfindung liegt die Aufgabe zugrunde, eine Anordnung mit mehreren über Leitungen verbundenen Einrichtungen bereitzustellen, welche einfach und kostengünstig ausgebildet ist.

Diese Aufgabe wird mit den Merkmalen von Anspruch 1 gelöst. Auf vorteilhafte Ausgestaltungen nehmen die Unteransprüche Bezug.

Die erfindungsgemäße Anordnung umfasst zumindest eine erste Einrichtung, zumindest eine zweite Einrichtung, zumindest eine dritte Einrichtung und eine Fördereinrichtung, wobei die Einrichtungen strömungsleitend über Leitungen miteinander verbunden sind, wobei in den Leitungen Rückschlagventile angeordnet sind, welche in Abhängigkeit der Strömungsrichtung des in der Anordnung transportierten Mediums das Medium durch die zweite Einrichtung oder die dritte Einrichtung leiten.

Dabei wird das Medium stets durch die erste Einrichtung geleitet. Die erfindungsgemäße Anordnung erfordert keinerlei schaltbare Ventile, so dass die Anordnung besonders einfach ausgebildet ist. Die Ansteuerung der zweiten Einrichtung beziehungsweise dritten Einrichtung hängt lediglich von der Strömungsrichtung des Mediums ab. Das in den Leitungen transportierte Medium kann beispielsweise Wasser, Glykol oder ein Wasser-Glykol-Gemisch sein. Dabei kann der Betriebsdruck verhältnismäßig klein sein. Dadurch ist es möglich, neben den Leitungen auch die Rückschlagventile kostengünstig aus Kunststoff auszubilden. Dadurch ist die Anordnung besonders leicht sowie kostengünstig und einfach herstellbar. Die Rückschlagventile der erfindungsgemäßen Anordnung sind passive Ventile, welche sich lediglich in Abhängigkeit der Strömungsrichtung des Mediums öffnen beziehungsweise schließen.

Die Leitungen können als Rohrleitungen oder als Schlauchleitungen ausgebildet sein. Dabei können die Rohrleitungen oder Schlauchleitungen insbesondere aus Kunststoff ausgebildet sein und je nach Ausgestaltung des transportierten Mediums auch als Mehrschichtrohr oder als Mehrschichtschlauch ausgebildet sein. Dadurch sind die Leitungen einfach und kostengünstig herstellbar und weisen ein geringes Gewicht auf.

Gemäß einer vorteilhaften Ausgestaltung bildet die erste Einrichtung eine zu temperierende Einrichtung. Die zu temperierende Einrichtung kann dabei eine oder auch mehrere Komponenten eines Elektrofahrzeugs, beispielsweise einen Akkumulator, eine Leistungselektronik oder eine Leitungs-, beziehungsweise Steckerkomponente umfassen. Derartige Komponenten weisen eine optimale Leistungsfähigkeit nur in einem begrenzten Temperaturspektrum auf und müssen dementsprechend je nach Umgebungsbedingungen und Leistungsanforderungen erwärmt oder gekühlt werden.

Dementsprechend kann die zweite Einrichtung eine Heizeinrichtung und die dritte Einrichtung eine Kühleinrichtung bilden. Die erfindungsgemäße Anordnung ermöglicht es dabei, die Heizeinrichtung oder die Kühleinrichtung lediglich durch Wahl der Förderrichtung des Mediums entweder durch die Heizeinrichtung oder die Kühleinrichtung zu leiten.

Die Fördereinrichtung ist vorzugsweise so ausgebildet, dass diese eine umkehrbare Förderrichtung aufweist. Dadurch ist es möglich, das Medium je nach Anforderung durch die zweite Einrichtung oder die dritte Einrichtung zu leiten.

In diesem Zusammenhang ist es insbesondere denkbar, dass die Fördereinrichtung als Verdrängerpumpe ausgebildet ist. Bei einer Verdrängerpumpe wird das Temperiermedium durch ein in sich geschlossenes Volumen befördert. Eine vorteilhafte Ausgestaltung einer Verdrängerpumpe in Form einer Rotationskolbenpumpe ist dabei eine Drehkolbenpumpe. Ein weiteres vorteilhaftes Ausführungsbeispiel ist eine Zahnradpumpe.

Verdrängerpumpen weisen den Vorteil auf, dass die Förderrichtung des Mediums besonders einfach umkehrbar ist. Es ist lediglich erforderlich, dass beispielsweise bei einer Drehkolbenpumpe die Drehrichtung der Drehkolben geändert wird. Dementsprechend ist es bei der erfindungsgemäßen Anordnung lediglich erforderlich, die Förderrichtung der Fördereinrichtung umzukehren, um das Medium der dritten Einrichtung zuzuführen, wenn zuvor die zweite Einrichtung durchströmt wurde. Bei einer Verdrängerpumpe ist es auch mit einfachen Mitteln möglich, den Fördermittelstrom an den tatsächlichen Bedarf anzupassen. Im Fall einer Drehkolbenpumpe ist es lediglich erforderlich, die Drehzahl der Drehkolben zu erhöhen oder abzusenken.

Die Leitung kann einen ersten Kreis ausbilden, welcher die Fördereinrichtung mit der ersten Einrichtung und der zweiten Einrichtung verbindet. Des Weiteren kann die Leitung einen zweiten Kreis ausbilden, welcher die Fördereinrichtung mit der ersten Einrichtung und der dritten Einrichtung verbindet. Dabei ist vorzugsweise dem ersten Kreis ein erstes Rückschlagventil und dem zweiten Kreis ein zweites Rückschlagventil zugeordnet. Die Rückschlagventile bewirken, dass das Medium wahlweise durch den ersten Kreis oder den zweiten Kreis strömt, wobei dies in Abhängigkeit von der Förderrichtung des Mediums erfolgt.

Eine erste Leitung kann die erste Einrichtung mit der Fördereinrichtung, eine zweite Leitung kann die Fördereinrichtung mit einem ersten Abzweig, eine dritte Leitung kann den ersten Abzweig mit der zweiten Einrichtung, eine vierte Leitung kann den ersten Abzweig mit der dritten Einrichtung, eine fünfte Leitung kann die zweite Einrichtung mit einem zweiten Abzweig, eine sechste Leitung kann die dritte Einrichtung mit dem zweiten Abzweig und eine siebte Leitung kann den zweiten Abzweig mit der ersten Einrichtung verbinden.

In einer vorteilhaften Ausgestaltung ist das erste Rückschlagventil der dritten Leitung und das zweite Rückschlagventil der sechsten Leitung zugeordnet. Dabei kann das erste Rückschlagventil einen Medienstrom von dem ersten Abzweig in Richtung der zweiten Einrichtung blockieren. Das zweite Rückschlagventil kann einen Medienstrom von dem zweiten Abzweig in Richtung der dritten Einrichtung blockieren. Bei dieser Ausgestaltung erfolgt das Durchströmen der zweiten Einrichtung beziehungsweise der dritten Einrichtung ausschließlich in Abhängigkeit von der Förderrichtung des Mediums.

Die Rückschlagventile und zumindest ein Teil der Leitungen können als Modul ausgebildet sein. Dadurch ist die Anordnung besonders kompakt.

Ein erfindungsgemäßes Elektrofahrzeug umfasst zumindest eine zu temperierende Einrichtung sowie eine erfindungsgemäße Anordnung.

Einige Ausführungsbeispiele der erfindungsgemäßen Anordnung werden nachfolgend anhand der Figuren näher beschrieben. Diese zeigen, jeweils schematisch:
- Fig. 1: ein Strömungsbild der Anordnung in einer ersten Strömungsrichtung;
- Fig. 2: ein Strömungsbild der Anordnung in einer zweiten Strömungsrichtung.

Die Figuren zeigen eine Anordnung 1, umfassend eine erste Einrichtung 2. Bei der vorliegenden Ausgestaltung ist die erste Einrichtung 2 eine zu temperierende Einrichtung und Bestandteil eines Elektrofahrzeuges. Die erste Einrichtung 2 beinhaltet den Akkumulator, die Elektromotoren, die Leistungselektronik und die Steckverbindungen für das Schnellladen. Diese Komponenten werden durch die Anordnung je nach Umgebungsbedingungen und Leistungsanforderungen gekühlt oder erwärmt.

Die Anordnung 1 umfasst neben der zu temperierenden erste Einrichtung 2 eine zweite Einrichtung 3 in Form einer Heizeinrichtung, eine dritte Einrichtung 4 in Form einer Kühleinrichtung und eine Fördereinrichtung 5. Die Einrichtungen 2, 3, 4, 5 sind über Leitungen 6 miteinander verbunden. Die Leitungen 6 nehmen ein Medium auf, vorliegend ein Wasser-Glykol-Gemisch. Die Leitungen 6 sind als Rohrleitungen oder als Schlauchleitungen in Form von Mehrschicht-Kunststoffrohren ausgebildet. In den Leitungen 6 sind Rückschlagventile 7, 8 angeordnet, welche in Abhängigkeit der Strömungsrichtung des Mediums das Medium durch die zweite Einrichtung 3 oder die dritte Einrichtung 4 leiten. Die Rückschlagventile 7, 8 sind ebenso wie die Leitungen 6 aus Kunststoff ausgebildet.

Die Fördereinrichtung 5 ist als Verdrängerpumpe in Form einer Drehkolbenpumpe ausgebildet und weist eine umkehrbare Förderrichtung auf.

Die Leitungen 6 sind so ausgestaltet, dass diese einen ersten Kreis 9 ausbilden, welcher die Fördereinrichtung 5 mit der zu temperierenden ersten Einrichtung 2 und der zweiten Einrichtung 3 verbindet. Des Weiteren bilden die Leitungen 6 einen zweiten Kreis aus, welcher die Fördereinrichtung 5 mit der zu temperierenden ersten Einrichtung 2 und der dritten Einrichtung 4 verbindet. Dem ersten Kreis 9 ist das erste Rückschlagventil 7 und dem zweiten Kreis 10 ist das zweite Rückschlagventil 8 zugeordnet.

Eine erste Leitung 6.1 verbindet die erste Einrichtung 2 mit der Fördereinrichtung 5. Eine zweite Leitung 6.2 verbindet die Fördereinrichtung 5 mit einem ersten Abzweig 11. Eine dritte Leitung 6.3 verbindet den ersten Abzweig 11 mit der zweiten Einrichtung 3. Eine vierte Leitung 6.4 verbindet den ersten Abzweig 11 mit der dritten Einrichtung 4. Eine fünfte Leitung 6.5 verbindet die zweite Einrichtung 3 mit einem zweiten Abzweig 12. Eine sechste Leitung 6.6 verbindet die dritte Einrichtung 4 mit dem zweiten Abzweig 12 und eine siebte Leitung 6.7 verbindet den zweiten Abzweig 12 mit der ersten Einrichtung 2.

Das erste Rückschlagventil 7 ist bei dieser Ausgestaltung der dritten Leitung 6.3 und das zweite Rückschlagventil 8 der sechsten Leitung 6.6 zugeordnet. Dabei sind die Rückschlagventile 7, 8 so angeordnet, dass das erste Rückschlagventil 7 einen Medienstrom von dem ersten Abzweig 11 in Richtung der zweiten Einrichtung 3 blockiert und das zweite Rückschlagventil 8 einen Medienstrom von dem zweiten Abzweig 12 in Richtung der dritten Einrichtung 4 blockiert.

Die Rückschlagventile 7, 8 und ein Teil der Leitungen 6 sind als Modul ausgebildet.

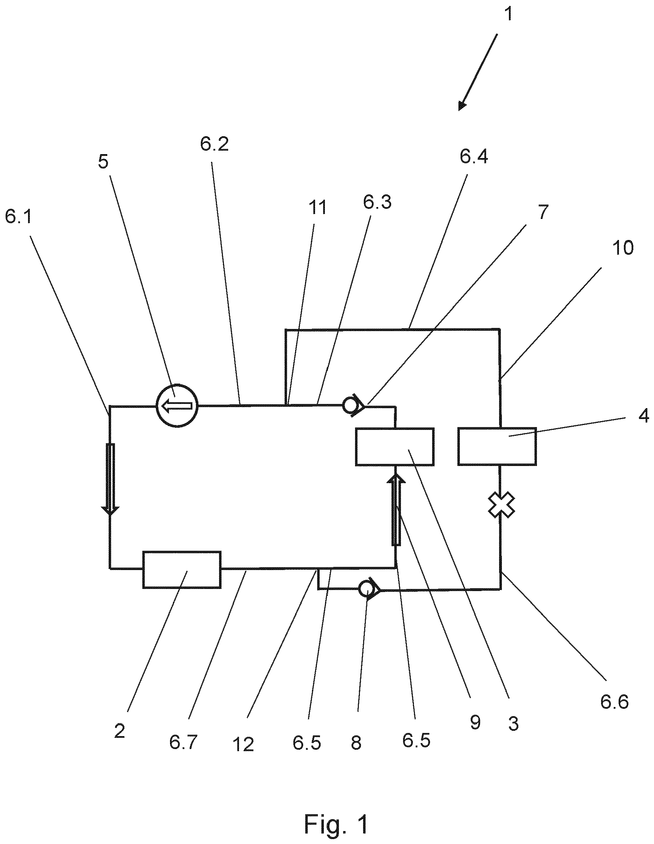

Bei der Ausgestaltung gemäß Figur 1 erfolgt eine Förderung des Mediums von der Fördereinrichtung 5 in Richtung der zu temperierenden ersten Einrichtung 2. Dabei blockiert das zweite Rückschlagventil 8 den Medienstrom von dem zweiten Abzweig 12 in Richtung der dritten Einrichtung 4. Somit kann das Medium nur die zweite Einrichtung 3 durchströmen und die zu temperierende erste Einrichtung 2 wird erwärmt.

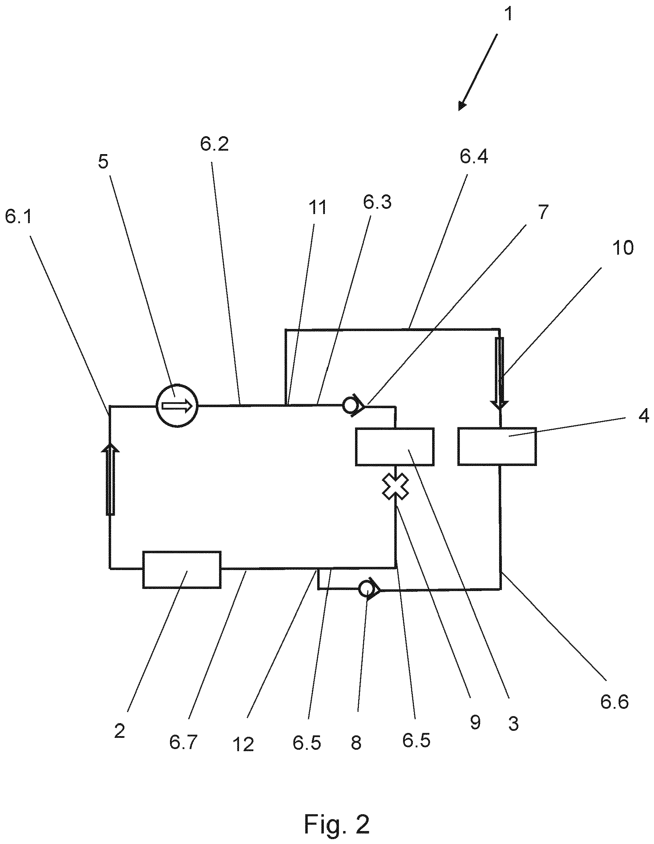

Bei der Ausgestaltung gemäß Figur 2 erfolgt eine Förderung des Temperiermediums von der Fördereinrichtung 5 in Richtung des ersten Abzweigs 11. Bei dieser Ausgestaltung blockiert das erste Rückschlagventil 7 den Medienstrom von dem zweiten Abzweig 11 in Richtung der zweiten Einrichtung 3. Somit kann das Medium bei dieser Ausgestaltung nur die dritte Einrichtung 4 durchströmen und die zu temperierende erste Einrichtung 2 wird gekühlt.

## Patentansprüche

1. Anordnung (1), umfassend zumindest eine erste Einrichtung (2), zumindest eine zweite Einrichtung (3), zumindest eine dritte Einrichtung (4) und eine Fördereinrichtung (5), wobei die Einrichtungen (2, 3, 4, 5) strömungsleitend über Leitungen (6) miteinander verbunden sind, **dadurch gekennzeichnet, dass** in den Leitungen (6) Rückschlagventile (7, 8) angeordnet sind, welche in Abhängigkeit der Strömungsrichtung des in der Anordnung (1) transportierten Mediums das Medium durch die zweite Einrichtung (3) oder die dritte Einrichtung (4) leiten.

2. Anordnung nach Anspruch 1, **dadurch gekennzeichnet, dass** die Leitungen (6) als Rohrleitungen oder als Schlauchleitungen ausgebildet sind.

3. Anordnung nach Anspruch 1 oder 2, **dadurch gekennzeichnet, dass** die erste Einrichtung (2) eine zu temperierende Einrichtung bildet.

4. Anordnung nach einem der Ansprüche 1 bis 3, **dadurch gekennzeichnet, dass** die zweite Einrichtung (3) eine Heizeinrichtung bildet.

5. Anordnung nach einem der Ansprüche 1 bis 4, **dadurch gekennzeichnet, dass** die dritte Einrichtung (4) eine Kühleinrichtung bildet.

6. Anordnung nach einem der Ansprüche 1 bis 5, **dadurch gekennzeichnet, dass** die Fördereinrichtung (5) eine umkehrbare Förderrichtung aufweist.

7. Anordnung nach einem der Ansprüche 1 bis 6, **dadurch gekennzeichnet, dass** die Fördereinrichtung (5) als Verdrängerpumpe ausgebildet ist.

8. Anordnung nach Anspruch 7, **dadurch gekennzeichnet, dass** die Fördereinrichtung (5) als Drehkolbenpumpe ausgebildet ist.

9. Anordnung nach einem der Ansprüche 1 bis 8, **dadurch gekennzeichnet, dass** die Leitungen (6) einen ersten Kreis (9) ausbilden, welcher die Fördereinrichtung (5) mit der ersten Einrichtung (2) und der zweiten Einrichtung (3) verbindet und dass die Leitungen (6) einen zweiten Kreis (10) ausbilden, welcher die Fördereinrichtung (5) mit der ersten Einrichtung (2) und der dritten Einrichtung (4) verbindet.

10. Anordnung nach Anspruch 9, **dadurch gekennzeichnet, dass** dem ersten Kreis (9) ein erstes Rückschlagventil (7) und dem zweiten Kreis (10) ein zweites Rückschlagventil (8) zugeordnet ist.

11. Anordnung nach einem der Ansprüche 1 bis 10, **dadurch gekennzeichnet, dass** eine erste Leitung (6.1) die erste Einrichtung (2) mit der Fördereinrichtung (5), eine zweite Leitung (6.2) die Fördereinrichtung (5) mit einem ersten Abzweig (11), eine dritte Leitung (6.3) den ersten Abzweig (11) mit der zweiten Einrichtung (3), eine vierte Leitung (6.4) den ersten Abzweig (11) mit der dritten Einrichtung (4), eine fünfte Leitung (6.5) die zweite Einrichtung (3) mit einem zweiten Abzweig (12), eine sechste Leitung (6.6) die dritte Einrichtung (4) mit dem zweiten Abzweig (12) und eine siebte Leitung (6.7) den zweiten Abzweig (12) mit der ersten Einrichtung (2) verbindet.

12. Anordnung nach Anspruch 11, **dadurch gekennzeichnet, dass** das erste Rückschlagventil (7) der dritten Leitung (6.3) und das zweite Rückschlagventil (8) der sechsten Leitung (6.6) zugeordnet ist.

13. Anordnung nach Anspruch 12, **dadurch gekennzeichnet, dass** das erste Rückschlagventil (7) einen Medienstrom von dem ersten Abzweig (11) in Richtung der zweiten Einrichtung (3) blockiert.

14. Anordnung nach Anspruch 12 oder 13, **dadurch gekennzeichnet, dass** das zweite Rückschlagventil (8) einen Medienstrom von dem zweiten Abzweig (12) in Richtung der dritten Einrichtung (4) blockiert.
